# EUROPÄISCHE PATENTSCHRIFT

(11) **EP 0 718 368 B1**
(45) Veröffentlichungstag und Bekanntmachung des Hinweises auf die Patenterteilung: **13.10.1999**
(21) Anmeldenummer: 95119340.8
(22) Anmeldetag: 07.12.1995
(51) Int. Cl.: C08L 81/02, C08L 81/00

(54) **Vernetzte Formmassen aus Polyarylensulfiden und Polyarylensulfoxiden, Verfahren zu ihrer Herstellung und ihre Verwendung**
Cross-linked moulding compositions of polyarylene sulphides and polyarylene-sulfoxides, associated manufacturing method and use
Matières à mouler réticulées à base de sulfures de polyarylène et de polyarylènesulfoxydes, leur procédé de préparation et leur utilisation

(30) Priorität: 23.12.1994 DE 4446495
(43) Veröffentlichungstag der Anmeldung: 26.06.1996
(73) Patentinhaber: Ticona GmbH, 65451 Kelsterbach (DE)
(72) Erfinder: Scheckenbach, Helmut, Dl., D-63225 Langen (DE); Schleicher, Andreas, Dr., D-65614 Beselich (DE)

(56) Entgegenhaltungen:
- EP-A- 0 388 970
- EP-A- 0 435 243
- WO-A-96/05246

## Beschreibung

Die Erfindung betrifft die Verwendung von Mischungen aus Polyarylensulfiden und Polyarylensulfoxiden, die bei bestimmten Temperaturen (teil-) vernetzte homogene Formmassen bilden, zur Herstellung von vernetzten oder teilvernetzten, Polyarylensulfid haltigen Formkörpern, blasenfreie Formkörper aus eben diesen Formmassen sowie Verfahren zur Herstellung dieser Formkörper.

Polyarylensulfide sind bekannt, ebenso Möglichkeiten zu ihrer Vernetzung. So können Polyphenylensulfide durch "curing" vernetzt werden. Dies kann zum einen durch einen Schmelzeprozeß geschehen, bei dem die Polymere kontinuierlich oberhalb ihres Kristallitschmelzpunktes über einen längeren Zeitraum in Gegenwart von Luft erhitzt werden. Dieses Erhitzen hat einen Anstieg der Schmelzeviskosität und eine Dunkelverfärbung des Polymers zur Folge. Zum anderen können Polyphenylensulfide knapp unterhalb ihres Schmelzpunktes in Gegenwart von Luft vernetzt werden. Dieses "Feststoffcuring" ist besonders geeignet für das Konvertieren größerer Mengen Polymer in Masse. Im allgemeinen findet dieser Prozeß bei Temperaturen zwischen 175-280° C statt. Hierbei findet eine Erhöhung des Molekulargewichts und der Schmelzviskosität statt (G. Allen, J.C. Bevington, Comprehensive Polymer Science, Volume 5, Pergamon Press, 1989, 543-560).

Ferner können Polyarylensulfide durch Ozon vernetzt werden (EP-A 0 091 088). Hierbei wird die Oberfläche des Polymers mit einem heißen Gasgemisch, das neben Ozon noch Sauerstoff oder Luft enthalten kann, in Kontakt gebracht.

Nachteile der vorstehend genannten Verfahren zum Vernetzen oder "curing" sind die langen Reaktionszeiten, die zum Vernetzen benötigt werden, sowie der nur begrenzt steuerbare Vernetzungsprozeß.

Aufgabe der Erfindung war es daher, die genannten Nachteile zu vermeiden.

Die Erfindung betrifft daher die Verwendung von Polyarylensulfoxid oder Sulfoxid-Gruppen enthaltendem Polyarylensulfid oder deren Mischung oder Blend mit Polyarylensulfid zur Herstellung von vernetzten oder teilvernetzten, Polyarylensulfid haltigen Formkörpern sowie blasenfreie Formkörper aus vernetzter oder teilvernetzter Polyarylensulfid haltiger Formmasse, erhältlich durch verschmelzen einer Polymermischungen enthaltend:
(A) 1 bis 99 Gew.-%, vorzugsweise 2,5 bis 98,5 Gew.-% und insbesondere 5 bis 98 Gew.-% mindestens eines Polyarylensulfids und
(B) 1 bis 99 Gew.-%, vorzugsweise 1,5 bis 97,5 Gew.-% und insbesondere 2 bis 95 Gew.-% mindestens eines Polyarylensulfoxides,
wobei die Angabe der Gewichtsprozente sich auf die Summe der Komponenten (A) und (B) bezieht und die Summe der Komponenten (A) und (B) stets 100 Gew.-% beträgt.

Die Erfindung betrifft ferner ein Verfahren zur Herstellung blasenfreier, vernetzter oder teilvernetzter Polyarylensulfid haltiger Formkörper, wobei ein teilweise oder vollständig oxidiertes Polyarylensulfid, das Sulfoxid-Gruppen enthält, oder eine Mischung oder ein Blend, welche mindestens ein Polyarylensulfid und mindestens ein Polyarylensulfoxid oder ein teilweise oder vollständig oxidiertes, Sulfoxid-Gruppen enthaltendes Polyarylensulfid enthalten, auf Temperaturen im Bereich von 280 bis 400°C, vorzugsweise auf eine Temperatur im Bereich von 280°C bis 380°C, erhitzt wird.

Polymermischungen aus Polyarylensulfid und Polyarylensulfoxid zur Herstellung von Polyarylensulfid-Schaum werden in WO 96/05246 beschrieben. Es war jedoch bisher nicht bekannt, daß es mit diesen Polymermischungen möglich ist, vernetzte Formmassen aus Polyarylensulfiden oder vernetzte Formmassen, die Polyarylensulfid enthalten, zu erhalten, wobei die Vernetzung steuerbar ist sowie in kurzen Reaktionszeiten abläuft.

Polyarylensulfide, die auch Polyarylenthioether genannt werden, sind Polymere, die mindestens eine Arylensulfid-Einheit (-A-S-; A = Arylen-Rest, S = Schwefel) enthalten. Arylene sind beispielsweise Phenylen, Biphenylen (-C₆H₄-), Naphthylen, die ein- oder mehrfach substituiert sein können. Substituenten sind z.B. geradkettige, cyclische oder verzweigte C₁-C₂₀-Kohlenwasserstoffreste, wie C₁-C₁₀-Alkylreste, z.B. Methyl, Ethyl, n-Propyl, iso-Propyl, n-Butyl, t-Butyl oder n-Hexyl, oder C₆-C₁₄-Arylreste, z.B. Phenyl oder Naphtyl; Halogene, Sulfonsäure-, Amino-, Nitro-, Cyano-, Hydroxy-, oder Carboxylgruppen.

Polyarylensulfoxide sind Polymere, die wenigstens eine Arylensulfoxid-Einheit (-Ar-SO- ; Ar = Arylen-Rest, SO = Sulfoxid-Gruppe) enthalten.

Polyarylensulfide, insbesondere Polyphenylensulfid, lassen sich auf Grundlage der Reaktion von dihalogenierten Aromaten mit Natriumsulfid nach EDMONDS und HILL herstellen. Polyarylensulfide und deren Herstellung sind in "Ullmann's Encyclopedia of Industrial Chemistry, Volume A21, B. Elvers, S. Hawkins und G. Schulz (Eds.), VCH, Weinheim-New York 1992, S. 463-472) beschrieben, worauf Bezug genommen wird.Die Synthese von sulfongruppenhaltigen Polyarylensulfiden ist in Chimia 28(9), (1974) 567 beschrieben, worauf ebenfalls Bezug genommen wird.

Polyarylensulfoxide können durch Oxidation von Polyarylensulfiden mit geeigneten Verfahren gewonnen werden. Die Herstellung von Polyarylensulfoxiden kann z.B. durch Oxidation mit Ozon, wie in der am 4. Mai 1993 eingereichten deutschen Patentanmeldung Nr. P 43 14 736.4 mit dem Titel "Oxidation von Polyarylensulfiden" beschrieben und worauf Bezug genommen wird, erfolgen.

Die Oxidation der Polyarylensulfide kann so durchgeführt werden, daß nur ein Teil der Sulfidbrücken in Sulfoxidgruppen überführt werden (unvollständige Oxidation z.B. durch Einsatz unterstöchiometrischer Mengen Oxidationsmittel). Solche Oxidationsprodukte werden unter dem Begriff Polyarylensulfoxide mit umfaßt. Die Oxidationsbedingungen können auch so angepaßt werden (Temperatur, Ozonkonzentration), daß neben Sulfoxid- auch Sulfonbrücken gebildet werden.

Polyarylensulfone und Polysulfone sind Polymere, die mindestens eine Arylensulfon-Einheit (-A-SO₂- ; A: Arylen-Rest, SO₂: Sulfongruppe) enthalten. Polyarylensulfone können beispielsweise durch Oxidation von Polyarylensulfiden mittels Wasserstoffperoxid oder Persäuren hergestellt werden. Die Herstellung von Polyarylensulfonen ist beispielsweise beschrieben in DE 43 14 738 A1, worauf Bezug genommen wird.

Polysulfone sind beschrieben in "Encyclopedia of polymer science and engineering, Volume 13, Wiley, New York 1988, Seite 196-211, Stichwort 'Polysulfones' ", worauf Bezug genommen wird.

Der hier gebrauchte Begriff Polyarylensulfon schließt Polysulfone mit ein.

Die Mischungen gemäß der Erfindung können übliche Additive enthalten, beispielsweise thermische Stabilisatoren, UV-Stabilisatoren, Antistatika, Flammschutzmittel, Farbstoffe, Pigmente, anorganische und/oder organische Füllstoffe sowie Gleitmittelzusätze wie Molybdändisulfid oder Graphit.

Die mittlere Korngröße (D₅₀-Wert) der Mischungsbestandteile (A) und (B) liegt im allgemeinen im Bereich von 0,3*10⁻⁶ bis 500*10⁻⁶ m, vorzugsweise 1*10⁻⁶ bis 300*10⁻⁶ m und insbesondere 10*10⁻⁶ bis 200*10⁻⁶ m. Das Polyarylensulfoxid beziehungsweise die Komponente (B) sollte möglichst fein sein. Bei der Komponente (A) spielt die Korngröße eine geringere Rolle, eine grobe Körnung ist im allgemeinen ausreichend.

Die Mischungen gemäß der Erfindung werden im allgemeinen aus den Einzelkomponenten in hierfür geeigneten Mischern hergestellt.

Bei dem Verfahren gemäß der Erfindung wird die Mischung nach bekannten Verfahren (z.B. Spritzguß, Heißpressen, Extrusion, Blasformen) in dafür geeigneten Apparaturen bei Temperaturen von 280° C bis 400° C, vorzugsweise 280 bis 380° C zu Formkörpern verarbeitet, wobei die Vernetzung stattfindet. Diese Formkörper sind homogen und weisen aufgrund ihres Vernetzungsgrades eine höhere Hitzebeständigkeit als nichtvernetzte Formkörper auf.

Mischungen gemäß der Erfindung können bei der thermischen Behandlung aufgrund der Anwesenheit von Polyarylensulfoxiden (B) zu einem blasenhaltigen oder aufgeschäumten Formkörper führen. Um einen blasenfreien Formkörper zu gewinnen, kann beispielsweise folgendermaßen verfahren werden:
a) Polyarylensulfid und Polyarylensulfoxid werden im Extruder bei Temperaturen oberhalb von etwa 310° C (z. B. 320° C) miteinander verschmolzen, wobei das Polyarylensulfoxid mit dem Polyarylensulfid miteinander reagieren und dabei Vernetzungen gebildet werden. Das hierbei gebildete Produkt enthält Blasen oder ist geschäumt je nach Sulfoxid-Anteil. Das abgekühlte Produkt wird zu Granulat verarbeitet. Das Granulat kann anschließend bei Temperaturen unter 310° C (z. B. bei 300° C) zu einem blasenfreien Formkörper verarbeitet werden.
b) Polyarylensulfid und Polyarylensulfoxid können auch im Extruder bei Temperaturen bis etwa 310° C (z. B. 300° C) ohne Schaum- oder Blasenbildung miteinander verschmolzen, wobei der erzielte Vernetzungsgrad kleiner ist als bei einer thermischen Behandlung oberhalb von 310° C.

Der Vernetzungsgrad ist durch den Anteil der jeweiligen Menge an Polyarylensulfoxid, Komponente (B), oder durch den Gehalt von Sulfoxidgruppen in einem teiloxidierten Polyarylensulfid steuerbar und kann beliebig variiert werden.

### Beispiele:

Das eingesetzte Polyphenylensulfid (A) hat eine Dichte von 1,35 g/cm³.

Als Polyphenylensulfoxid (B) wurde das in der oben aufgeführten DE-A 43 14 736 nach Beispiel 1 hergestellte Produkt verwendet.

Die mittlere Korngröße (D₅₀-Wert) des Mischungsbestandteiles (A) betrug ca. 20*10⁻⁶ m, die mittlere Korngröße des Mischungsbestandteils (B) betrug ca. 60*10⁻⁶ m.

Die Mischungen wurden auf einem Mischer der Marke Diosna (Hersteller: Dierks & Söhne, Osnabrück, Bundesrepublik Deutschland) gemischt.

Es wurden folgende Mischungen hergestellt:

| | Polyphenylensulfid [Gew.-%] | Polyphenylensulfoxid [Gew.-%] |
|---|---|---|
| Beispiel 1 | 90 | 10 |
| Beispiel 2 | 75 | 25 |
| Beispiel 3 | 50 | 50 |
| Beispiel 4 | 25 | 75 |
| Vergleichsbeispiel 1 | 100 | - |
| Vergleichsbeispiel 2 | - | 100 |

An diesen Mischungen wurden thermoanalytische Untersuchungen durchgeführt.
- DSC-Meßgerät:: DSC-7 (Hersteller: Perkin-Elmer, Überlingen, Bundesrepublik Deutschland)
- Meßbedingungen:: Meßatmosphäre: Stickstoff
Aufheizrate/Abkühlrate: 20° C/min
Temperaturprogramm (alle Beispiele):
1. Heizen von 50° C auf 380° C,
Abkühlen von 380° C auf 50° C,
2. Heizen von 50° C auf 380° C,
Zusätzlich wurde Beispiel 3 noch mit folgendem
Temperaturprogramm untersucht (Beispiel 3b):
1. Heizen von 50° C auf 320° C,
Abkühlen von 320° C auf 50° C,
2. Heizen von 50° C auf 320° C.

Die erhaltenen Ergebnisse sind in Tabelle 1 dargestellt.

| | 1. Heizen | | | Abkühlen | | 2. Heizen | |
|---|---|---|---|---|---|---|---|
| | Enthalpie [J/g] | Schmelzpeak [° C] | Exothermie [° C] | Enthalpie [J/g] | Rekristallisationspeak [° C] | Enthalpie [J/g] | Schmelzpeak [° C] |
| Bsp. 1 | 43 | 298 | 369 | -42 | 207 | 29 | 278 |
| Bsp. 2 | 35 | 298 | 367 | -8 | 207 | 22 | 277 |
| Bsp. 3a | 19 | 296 | 369 | 0 | -¹⁾ | 0 | -¹⁾ |
| Bsp. 4 | 7 | 299 | 368 | 0 | -¹⁾ | 0 | -¹⁾ |
| Bsp. 3b (320°C) | 21 | 297 | -¹⁾ | -30 | 225 | 16 | 282 |
| Vergleichs-bsp. 1 | 50 | 297 | -¹⁾ | -50 | 232 | 52 | 283 |
| Vergleichs-bsp. 2 | -¹⁾ | -¹⁾ | 368 | -¹⁾ | -¹⁾ | -¹⁾ | -¹⁾ |

| | | | | | | | |
|---|---|---|---|---|---|---|---|
| ¹⁾ nicht vorhanden | | | | | | | |

Aus den Beispielen 1 bis 4 ist zu erkennen, daß mit zunehmendem Polyphenylensulfoxid-Anteil die Enthalpie abnimmt. Ebenso ist eine Abnahme der Enthalpie vom 1. zum 2. Heizen hin festzustellen. Der Rekristallisationspeak der Mischungen 1 bis 4 tritt bei niedrigeren Temperaturen auf oder ist gar nicht vorhanden im Gegensatz zu Vergleichsbeispiel 1. Dies zeigt, daß eine Vernetzungsreaktion des Polyphenylensulfids stattgefunden hat. Diese Vernetzungsreaktion ist durch den Anteil an Polyphenylensulfoxid genau steuerbar und findet sehr rasch statt, da sie bereits beim 1. Heizen in der DSC beobachtbar ist.

## Patentansprüche

1. Verwendung von Polyarylensulfoxid oder Sulfoxid-Gruppen enthaltendem Polyarylensulfid oder deren Mischung oder Blend mit Polyarylensulfid zur Herstellung von vernetzten oder teilvernetzten, Polyarylensulfid haltigen Formkörpern.

2. Verwendung nach Anspruch 1, dadurch gekennzeichnet, daß die Verarbeitung zu Formkörpern durch Heißpressen, Spritzgießen, Extrudieren oder Blasformen erfolgt.

3. Blasenfreier Formkörper aus vernetzter oder teilvernetzter Polyarylensulfidhaltiger Formmasse, erhältlich durch verschmelzen einer Polymermischung enthaltend
(A) 1 bis 99 Gew.-% mindestens eines Polyarylensulfids und
(B) 1 bis 99 Gew.-% mindestens eines Polyarylensulfoxids,
wobei die Summe der Komponenten (A) und (B) stets 100 Gew.-% beträgt.

4. Formkörper nach Anspruch 3, dadurch gekennzeichnet, daß die Mengenverhältnisse der Komponente (A) vorzugsweise 2,5 bis 98,5 Gew.-% und insbesondere 5 bis 98 Gew.-% und die der Komponente (B) vorzugsweise 1,5 bis 97,5 Gew-% und insbesondere 2 bis 95 Gew.-% betragen.

5. Formkörper nach Anspruch 3 oder 4, dadurch gekennzeichnet, daß die Komponente (B) ein teiloxidiertes Polyarylensulfid ist, das Sulfoxid-Gruppen enthält.

6. Formkörper nach einem der Ansprüche 3 bis 5, dadurch gekennzeichnet, daß als Komponente (A) lineares oder verzweigtes Polyphenylensulfid eingesetzt wird.

7. Formkörper nach einem der Ansprüche 3 bis 6, dadurch gekennzeichnet, daß als Komponente (B) lineares und/oder verzweigtes Polyphenylensulfoxid oder teiloxidiertes Polyphenylensulfid, das Sulfoxid-Gruppen enthält, eingesetzt wird.

8. Formkörper nach einem der Ansprüche 3 bis 7, dadurch gekennzeichnet, daß die Polymermischung zusätzlich thermische Stabilisatoren, UV-Stabilisatoren, Antistatika, Flammschutzmittel, Pigmente, anorganische und/oder organische Füllstoffe enthält.

9. Formkörper nach einem der Ansprüche 3 bis 8, dadurch gekennzeichnet, daß die mittlere Korngröße D₅₀ der Komponente (B) im Bereich von 0,3*10⁻⁶ bis 500*10⁻⁶ m, vorzugsweise 1*10⁻⁶ bis 300*10⁻⁶ m und insbesondere 10*10⁻⁶ bis 200*10⁻⁶ m liegt.

10. Verfahren zur Herstellung eines Formkörpers nach einem der Ansprüche 3 bis 9, dadurch gekennzeichnet, daß die Polymermischung in einem Extruder bei Temperaturen oberhalb von 310 °C verschmolzen wird, das hierbei gebildete Produkt abgekühlt und zu Granulat verarbeitet wird und das Granulat anschließend bei Temperaturen unter 310 °C zu einem Formkörper verarbeitet wird.

11. Verfahren zur Herstellung eines Formkörpers nach einem der Ansprüche 3 bis 9, dadurch gekennzeichnet, daß die Polymermischung in einem Extruder bei Temperaturen bis 310 °C verschmolzen wird.

## Claims

1. The use of polyarylene sulfoxide or polyarylene sulfide containing sulfoxide groups or a mixture or blend thereof with polyarylene sulfide for producing crosslinked or partially crosslinked moldings comprising polyarylene sulfide.

2. The use as claimed in claim 1, wherein processing to produce moldings is carried out by hot pressing, injection molding, extrusion or blow molding.

3. A bubble-free molding comprising a crosslinked or partially crosslinked molding composition comprising polyarylene sulfide and obtainable by melting a polymer mixture comprising
(A) from 1 to 99% by weight of at least one polyarylene sulfide and
(B) from 1 to 99% by weight of at least one polyarylene sulfoxide,
where the sum of the components (A) and (B) is always 100% by weight.

4. A molding as claimed in claim 3, wherein the proportion by weight of the component (A) is preferably from 2.5 to 98.5% by weight and in particular from 5 to 98% by weight and that of the component (B) is preferably from 1.5 to 97.5% by weight and in particular from 2 to 95% by weight.

5. A molding as claimed in claim 3 or 4, wherein the component (B) is a partially oxidized polyarylene sulfide containing sulfoxide groups.

6. A molding as claimed in any one of claims 3 to 5, wherein the component (A) used is linear or branched polyphenylene sulfide.

7. A molding as claimed in any one of claims 3 to 6, wherein the component (B) used is linear and/or branched polyphenylene sulfoxide or partially oxidized polyphenylene sulfide containing sulfoxide groups.

8. A molding as claimed in any one of claims 3 to 7, wherein the polymer mixture further comprises heat stabilizers, UV stabilizers, antistatics, flame retardants, pigments, inorganic and/or organic fillers.

9. A molding as claimed in any one of claims 3 to 8, wherein the mean particle size D₅₀ of the component (B) is in the range from 0.3×10⁻⁶ to 500×10⁻⁶ m, preferably from 1×10⁻⁶ to 300×10⁻⁶ m and in particular from 10×10⁻⁶ to 200×10⁻⁶ m.

10. A process for producing a molding as claimed in any one of claims 3 to 9, which comprises melting the polymer mixture in an extruder at temperatures of above 310°C, cooling the product formed in this way and processing it to produce granules and subsequently processing the granules at temperatures of less than 310°C to produce a molding.

11. A process for producing a molding as claimed in any one of claims 3 to 9, which comprises melting the polymer mixture in an extruder at temperatures of up to 310°C.

## Revendications

1. Utilisation de poly(sulfoxyde d'arylène) ou de poly(sulfure d'arylène) contenant des groupements sulfoxyde, ou de leur mélange ou combinaison avec du poly(sulfure d'arylène) pour la préparation de corps moulés contenant du poly(sulfure d'arylène), réticulés ou partiellement réticulés.

2. Utilisation selon la revendication 1, caractérisée en ce que la transformation en corps moulés s'effectue par pressage à chaud, moulage par injection, extrusion ou moulage par soufflage.

3. Corps moulé exempt de bulles, en matière de moulage contenant du poly(sulfure d'arylène) réticulée ou partiellement réticulée, que l'on peut obtenir par fusion d'un mélange de polymères contenant :
(A) 1 à 99% en poids d'au moins un poly(sulfure d'arylène) et
(B) 1 à 99% en poids d'au moins un poly(sulfoxyde d'arylène),
la somme des composants (A) et (B) valant toujours 100% en poids.

4. Corps moulé selon la revendication 3, caractérisé en ce que les proportions massiques du composant (A) valent de préférence 2,5 à 98,5% en poids et en particulier 5 à 98% en poids, et du composant (B) de préférence 1,5 à 97,5% en poids et en particulier 2 à 95% en poids.

5. Corps moulé selon la revendication 3 ou 4, caractérisé en ce que le composant (B) est un poly(sulfure d'arylène) partiellement oxydé qui contient des groupements sulfoxyde.

6. Corps moulé selon l'une des revendications 3 à 5, caractérisé en ce que comme composant (A), on utilise un poly(sulfure de phénylène) linéaire ou ramifié.

7. Corps moulé selon l'une des revendications 3 à 6, caractérisé en ce que comme composant (B), on utilise du poly(sulfoxyde de phénylène) linéaire et/ou ramifié ou du poly(sulfure de phénylène) partiellement oxydé qui contient des groupements sulfoxyde.

8. Corps moulé selon l'une des revendications 3 à 7, caractérisé en ce que le mélange de polymères contient de plus des stabilisateurs thermiques, des stabilisateurs vis-à-vis des UV, des agents antistatiques, des agents de protection contre les flammes, des pigments, des charges minérales et/ou organiques.

9. Corps moulé selon l'une des revendications 3 à 8, caractérisé en ce que la taille particulaire moyenne D₅₀ du composant (B) se situe dans la plage de 0,3*10⁻⁶ à 500*10⁻⁶ m, de préférence 1*10⁻⁶ à 300*10⁻⁶ m et en particulier 10*10⁻⁶ à 200*10⁻⁶ m.

10. Procédé de préparation d'un corps moulé selon l'une des revendications 3 à 9, caractérisé en ce que le mélange de polymères est fondu dans une extrudeuse à des températures supérieures à 310°C, le produit ainsi formé est refroidi et transformé en granulé, et le granulé est ensuite transformé en un corps moulé à des températures inférieures à 310°C.

11. Procédé de préparation d'un corps moulé selon l'une des revendications 3 à 9, caractérisé en ce que le mélange de polymères est fondu dans une extrudeuse à des températures jusqu'à 310°C.
